# FASCICULE DE BREVET EUROPEEN

(11) **EP 2 285 561 B1**
(45) Date de publication et mention de la délivrance du brevet: **28.12.2011**
(21) Numéro de dépôt: 09761865.6
(22) Date de dépôt: 14.05.2009
(51) Int. Cl.: B32B 3/18, B29C 67/20, B29C 70/66

(54) **PROCÉDÉ POUR LA RÉALISATION D'UN MATÉRIAU CELLULAIRE À BASE DE BILLES MÉTALLIQUES CREUSES ET MATÉRIAU CELLULAIRE**
VERFAHREN ZUR HERSTELLUNG EINES ZELLULÄREN MATERIALS AUF GRUNDLAGE VON HOHLEN METALLKÜGELCHEN UND ZELLMATERIAL
METHOD FOR PREPARING A CELLULAR MATERIAL BASED ON HOLLOW METAL BEADS AND CELLULAR MATERIAL

(30) Priorité: 16.05.2008 FR 0802658
(43) Date de publication de la demande: 23.02.2011
(73) Titulaire: ONERA (Office National d'Etudes et de Recherches Aérospatiales), 92320 Châtillon (FR)
(72) Inventeur: RAFAY, Alain, F-92350 Le Plessis Robinsson (FR); AUFFRAY, Nicolas, F-75014 Paris (FR); BOUCHET, Régis, F-28300 Jouy (FR); JOSSO, Pierre, F-92130 Issy Les Moulineaux (FR); LOZAT, Jérôme, F-73330 Domessin (FR); MARCADON, Vincent, F-91400 Orsay (FR)
(74) Mandataire: Bloch & Bonnétat
(86) Numéro de dépôt international: PCT/FR2009/000563
(87) Numéro de publication internationale: WO 2009/150314

(56) Documents cités:
- WO-A-2005/061208
- US-A- 1 087 876
- US-A- 4 582 534

## Description

La présente invention concerne un procédé pour la réalisation d'un matériau cellulaire plastiquement déformable à base de billes métalliques creuses, ainsi qu'un tel matériau cellulaire plastiquement déformable.

On connaît déjà des matériaux plastiquement déformables à base de billes métalliques creuses. Ces matériaux sont actuellement très recherchés pour leurs nombreuses propriétés physiques (robustesse, légèreté, résistance à l'impact, etc.). Aussi trouvent-ils de multiples applications, notamment dans des dispositifs d'absorption d'énergie mécanique (tels que présentés dans l'article "Modelling of MHS cellular solid in large strains" publié dans International Journal of Mechanical Sciences Vol. 48 (2006) p. 1273-1286, ou encore dans l'article "Uniaxial Elasto-Plastic Behaviour of Adhesively Bonded Hollow Sphere Structures (HSS) : Numerical Simulations and Experiments" des volumes 539-543 de Materials Science Forum (2007) p. 1874-1879). De tels dispositifs sont par exemple utilisés en construction aéronautique, navale, automobile, etc ...

Il est notamment décrit, dans le document FR 2 585 445, un procédé pour la réalisation d'un objet en matériau cellulaire sous la forme d'un agencement compact de billes métalliques creuses. A cette fin, on introduit une quantité appropriée de billes métalliques creuses dans un moule ayant la forme de l'objet souhaité, puis on solidarise les billes en contact les unes par rapport aux autres.

Par ailleurs, le document FR 2 615 787 décrit un procédé pour la fabrication d'objets en matériau cellulaire à base de nappes de billes métalliques creuses. Selon ce procédé, des nappes de billes sont disposées dans un moule pour en épouser la forme. Une fois le moule chargé de nappes de billes, les billes en contact sont fixées les unes par rapport aux autres.

Ainsi, la mise en oeuvre des procédés connus des documents FR 2 585 455 et FR 2 615 787 nécessite impérativement l'utilisation d'un moule pour accueillir soit des billes, soit des nappes de bills.

Le document US 4582534 divulgue les characteristiques des préambules des revendications 1 et 9.

Bien entendu, l'utilisation même d'un moule est contraignante, puisqu'il est nécessaire de le fabriquer, puis généralement de l'éliminer après l'obtention de l'objet souhaité. En outre, seuls des objets pleins en matériau cellulaire peuvent être obtenus par ces procédés connus, la fabrication des objets creux ou évidés n'étant pas, ou que très difficilement, envisageable.

La présente invention a pour objet de remédier à ces inconvénients.

A cette fin, selon l'invention, le procédé pour la réalisation d'un matériau cellulaire plastiquement déformable à base de billes métalliques creuses, apte à absorber de l'énergie mécanique, est remarquable en ce qu'on utilise, comme structure élémentaire constitutive du matériau cellulaire, au moins une chaîne à billes, dans laquelle lesdites billes métalliques creuses sont deux à deux reliées les unes aux autres par une articulation.

Ainsi, une telle chaîne à billes (encore désignée « Ball Chain » en anglais) facilite la manipulation des billes métalliques creuses lors de la réalisation du matériau cellulaire à billes de l'invention.

En effet, grâce à un tel agencement de billes, on peut notamment :
- bobiner ladite chaîne à billes autour de la surface latérale d'un objet servant de mandrin. Un tel bobinage permet notamment de recouvrir du matériau cellulaire à base de billes métalliques creuses de l'invention des objets de forme développable comme non développable (ces objets pouvant être conservés ou, au contraire, éliminés des objets en matériau cellulaire souhaités) ;
- disposer ladite chaîne à billes dans un moule. Ainsi, lorsque plusieurs chaînes à billes sont par exemple utilisées, on peut les conformer à la forme du moule en les disposant aléatoirement ou de façon ordonnée dans celui-ci. Ce moule peut faire partie de l'objet en matériau cellulaire souhaité ou bien être éliminé de ce dernier ;
- entrelacer une pluralité de telles chaînes à billes les unes avec les autres ou, en variante, avec des liens (par exemple métalliques ou synthétiques), de manière à former des nappes de billes aptes notamment à résister à l'impact et à la perforation. En outre, pour obtenir des nappes de plus grande épaisseur, on peut, par exemple :
   - superposer plusieurs nappes de billes de plus faibles épaisseurs les unes sur les autres, puis les assembler ensemble (par exemple par brasage, collage, etc ...). Dans chaque nappe de billes, la distance entre les centres de deux billes adjacentes d'une chaîne à billes peut être égale à 4√2/√3 fois le rayon d'une bille ;
   - réaliser un tissage en trois dimensions de chaînes à billes, selon un procédé connu du domaine des applications textiles.
   De plus, les nappes de billes de faibles ou plus grandes épaisseurs ainsi réalisées peuvent par exemple être enroulées autour de la surface latérale d'objets ;
- etc ...

De plus, quelle que soit la manière dont la ou les chaînes à billes ont été utilisées (bobinage, moulage, tissage, etc ...), on peut avantageusement fixer ponctuellement lesdites billes en contact les unes par rapport aux autres, de manière à obtenir, par exemple, un matériau cellulaire à base de billes au moins partiellement rigide.

Par ailleurs, il résulte de ce qui précède que la présente invention concerne également un matériau cellulaire plastiquement déformable apte à absorber de l'énergie mécanique, ledit matériau étant constitué de billes métalliques creuses. Selon l'invention, le matériau est remarquable en ce que lesdites billes métalliques creuses sont deux à deux reliées les unes aux autres par une articulation, à la manière d'une chaîne à billes.

De préférence, selon l'invention, ladite articulation peut être un maillon en forme d'haltère.

Ainsi, le matériau cellulaire de l'invention présente une grande capacité d'absorption d'énergie mécanique en cas d'impact et de compression. En effet, les billes étant autant de cellules aptes à se déformer plastiquement et ainsi à dissiper l'énergie absorbée par ledit matériau, leur déformation permet au matériau cellulaire d'accepter des déformations très importantes, tout en conservait un niveau raisonnable de contraintes à l'intérieur de celui-ci. De plus, les billes creuses réduisent notablement le poids du matériau cellulaire et lui confèrent une porosité élevée.

On remarquera que, par le document WO 2005/061208, il est connu d'utiliser des colliers de perles pleines en carbone, graphite, ou polymère destinées à être éliminées, pour former un matériau poreux constitué d'une matrice comportant des vides de positions prédéfinies. Ces vides sont obtenus à partir desdites perles pleines qui sont disposées au sein de la matrice et détruites ultérieurement, lors du processus de fabrication du matériau poreux. Ainsi, un tel matériau poreux ne comporte pas de cellules individuelles aptes à se déformer plastiquement sous contrainte (les vides de ce matériau poreux ne pouvant pas, de par leur nature même, se déformer plastiquement). En revanche, les billes métalliques creuses du matériau de la présente invention forment autant de cellules individuelles déformables sous contrainte (notamment par l'intermédiaire de leur coque) et aptes à absorber de l'énergie mécanique.

Selon une autre caractéristique de la présente invention, le matériau cellulaire à base de billes métalliques creuses peut être constitué d'au moins deux telles chaînes à billes reliées l'une à l'autre.

Les chaînes à billes ainsi reliées peuvent l'être par leurs extrémités ou bien, en variante, à n'importe quel emplacement de manière à former un réseau plus ou moins complexe et régulier de chaînes à billes.

On notera que les liaisons entre les chaînes à billes peuvent être réalisées en mettant en oeuvre des procédés chimiques, physico-chimiques, mécaniques, etc.

Par ailleurs, lorsque le matériau cellulaire de l'invention est formé à partir de plusieurs chaînes à billes métalliques creuses, les billes peuvent présenter des caractéristiques soit identiques (taille des billes, forme des billes, matériau, etc.), soit différentes de manière à obtenir un matériau cellulaire ayant des propriétés structurales hétérogènes.

De plus, selon l'invention, au sein d'une même chaîne à billes, les billes peuvent présenter des caractéristiques (taille, forme, matériau, etc ...) identiques ou bien être différentes.

On notera que le matériau cellulaire à base de billes de l'invention pourra être confiné (que les billes soient solidarisées entre elles ou non), par exemple, dans une structure cloisonnée.

En outre, les éventuelles liaisons ponctuelles supplémentaires entre billes voisines résultent de procédés d'assemblage complémentaires (de type brasage, soudage, collage, etc...).

Les figures du dessin annexé feront bien comprendre comment l'invention peut être réalisée. Sur ces figures, des références identiques désignent des éléments semblables.

La figure 1 représente schématiquement et partiellement, en coupe transversale, une chaîne à billes métalliques creuses, pouvant être utilisée pour former le matériau cellulaire à base de billes de l'invention, dans laquelle la liaison entre deux billes adjacentes est une articulation.

Les figures 2A, 2B et 2C illustrent la réalisation de nappes de billes conformément à la présente invention.

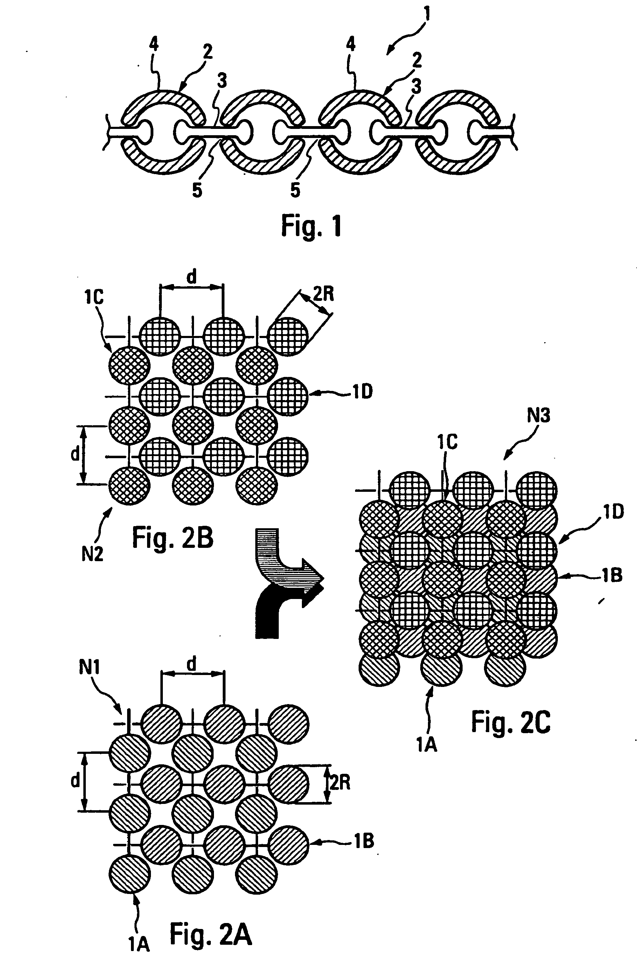

Comme représenté sur la figure 1, la chaîne à billes 1 apte à être utilisée dans la mise en oeuvre de l'invention comporte des billes métalliques creuses 2 (par exemple en tôle emboutie) de forme sphérique. Chaque bille 2 est reliée à la bille 2 adjacente par une articulation 3 (par exemple un maillon en forme d'haltère). Les articulations 3 sont articulées sur les coques 4 des billes 2, au niveau d'orifices 5 ménagés à cet effet.

### Premier exemple de réalisation conforme à l'invention

On utilise ici des chaînes à billes 1 (telles qu'illustrées sur la figure 1) en laiton nickelé (comprenant 30% de zinc). Le diamètre des billes métalliques creuses 2 est approximativement de 2mm et l'épaisseur de leur coque 4 avoisine les 240µm.

Afin de former un pion cylindrique en matériau cellulaire à base de billes métalliques creuses, les chaînes à billes 1 sont tout d'abord disposées aléatoirement dans un moule cylindrique en alumine de diamètre intérieur égal à 34mm et de hauteur égale à 60mm. Les billes 2 sont ensuite fixées les unes par rapport aux autres au moyen d'une brasure eutectique cuivre-argent. On obtient alors, après avoir extrait du moule les chaînes à billes 1, un pion cylindrique en matériau cellulaire d'un diamètre de 33,5mm et d'une hauteur de 40mm.

Un tel pion peut être mis en oeuvre dans une structure adaptative capable à la fois de garder son intégrité en se déformant très peu sous de faibles contraintes et d'absorber des déformations importantes sous de fortes contraintes.

### Deuxième exemple de réalisation conforme à l'invention

Dans cet exemple, on utilise des chaînes à billes 1 semblables à celles mises en oeuvre dans le premier exemple, ainsi qu'un tube extrudé en laiton CuZn36 présentant un diamètre intérieur égal à 32mm, un diamètre extérieur égal à 34mm et une hauteur égale à 40mm.

Pour réaliser une pièce cylindrique composée en partie de matériau cellulaire à base de billes métalliques creuses, on remplit simplement le tube extrudé de chaînes à billes 1 en les disposant de manière aléatoire dans celui-ci.

Il est à noter qu'aucun assemblage (par brasage, collage, etc ...) des chaînes à billes 1, entre elles ou avec le tube extrudé, n'est ici réalisé (les chaînes à billes 1 restant ainsi libres de tout mouvement à l'intérieur du tube), bien qu'un tel assemblage permettrait d'augmenter de façon significative la quantité d'énergie dissipée par le tube en matériau cellulaire lorsqu'il est soumis à un écrasement.

### Troisième exemple de réalisation conforme à l'invention

On utilise ici une unique chaîne à billes creuses 1 d'une longueur égale à 100m afin de recouvrir, avec le matériau cellulaire à base de billes de l'invention, la surface extérieure d'un carter de turbomachine de diamètre 15cm et de longueur 25cm. Les billes creuses 2, de diamètre égal à 3,6mm, sont en acier inoxydable de type 316L. Les billes voisines en contact peuvent être assemblées ou non entre elles, par exemple par soudage.

A cette fin, on bobine tout d'abord, sur plusieurs couches, l'unique chaîne à billes 1 autour du carter de turbomachine. La chaîne à billes 1 ainsi enroulée est alors confinée au moyen de plaques en acier inoxydable (de type 316L), le tout (chaînes et plaques) étant éventuellement soudé pour conférer une unité à la structure.

La couche de protection en matériau cellulaire à base de billes ainsi constituée a notamment pour fonction de contenir les pales de la turbomachine en cas de rupture de la structure, dans le cadre d'applications à moyenne température (par exemple jusqu'à 600°C).

### Quatrième exemple de réalisation conforme à l'invention

Dans cet exemple, des chaînes à billes 1 en alliage d'aluminium (de type AU4G) sont utilisées pour concevoir une nappe en matériau cellulaire à base de billes, le diamètre des billes métalliques creuses 2 étant de 1 mm.

A cette fin, on entrelace régulièrement des chaînes à billes 1 dans une nappe composée de fils de KEVLAR (marque déposée) pour constituer une nappe de billes. On répète cette opération plusieurs fois. On dispose alors d'un ensemble de nappes de billes que l'on superpose les unes sur les autres avant de les assembler de manière à obtenir une nappe de billes métalliques creuses d'épaisseur égale à 15mm.

La nappe (analogue à un tissu) ainsi obtenue présente, d'une part, de très bonnes propriétés en tension grâce aux fils de KEVLAR et, d'autre part, de très bonnes propriétés d'absorption d'impact de projectiles grâce aux chaînes à billes métalliques creuses 1. Elle est notamment destinée à des applications de blindage léger (par exemple pour équiper des gilets pare-balles).

### Cinquième exemple de réalisation confornne à l'invention

Dans cet exemple, qui est illustré par les figures 2A, 2B et 2C, on utilise des chaînes à billes métalliques creuses 1A, 1B, 1C et 1D (semblables à celle illustrée sur la figure 1) dans lesquelles, d'une part, les billes présentent toutes le même rayon R et, d'autre part, la distance d entre les centres de deux billes voisines d'une chaîne est égale à 4√2/√3 fois ledit rayon R. Les billes des chaînes à billes 1 A à 1 D peuvent être en acier inoxydable 316L.

Comme l'illustre la figure 2A, une pluralité de chaînes à billes 1 A est entrelacée avec une pluralité de chaînes à billes 1 B pour former une nappe N1. Dans la nappe N1, les chaînes à billes 1A sont disposées en trame (ou en chaîne), alors que les chaînes à billes 1 B sont disposées en chaîne (ou en trame). De plus, dans cette nappe N1, chaque bille d'une chaîne à billes 1 A (ou 1 B) est disposée au centre de quatre billes appartenant à des chaînes à billes 1 B (ou 1A) voisines.

De façon analogue à ce qui vient d'être décrit pour la nappe N1, on réalise une nappe N2, semblable à cette dernière, avec les chaînes 1C et 1 D (voir la figure 2B).

Ensuite, comme l'illustre la figure 2C, les nappes N1 et N2 sont superposées de manière qu'une bille de la nappe N1 (ou N2) soit disposée au centre de quatre billes de la nappe N2 (ou N1). On obtient alors une nappe composite N3, qui peut être rigidifiée, par exemple par soudage ou frittage.

Bien entendu, en empilant plusieurs nappes N1 et N2 de la façon décrite ci-dessus, on peut réaliser des structures cubiques centrées.

L'homme du métier comprendra qu'en définissant de façon appropriée les chaînes à billes (diamètre des billes et distance entre deux billes adjacentes), le type de tissage et en superposant différentes nappes, il est possible d'élaborer d'autres structures à base de billes conformes à l'invention.

Par exemple, en faisant varier judicieusement le diamètre des billes et la distance entre les billes de deux nappes successives, on peut réaliser facilement des empilements réguliers de forme courbe pour habiller des carters de turbomachines.

On notera en outre que le matériau cellulaire à base de billes de la présente invention peut également être mis en oeuvre dans la fabrication de matériaux architecturés pour des applications multifonctionnelles à dominante structurale : tenue mécanique, absorption des chocs et tenue en température, etc.

## Revendications

1. Procédé pour la réalisation d'un matériau cellulaire plastiquement déformable apte à absorber de l'énergie mécanique utilisant, comme structure élémentaire constitutive, des billes métalliques creuses (2) reliées deux à deux les unes aux autres,
**caractérisé en ce que** les billes métalliques creuses (2) sont reliées par une articulation (3) pour former au moins une chaîne à billes (1).

2. Procédé selon la revendication 1,
**caractérisé en ce qu'**on bobine ladite chaîne à billes (1) autour de la surface latérale d'un objet servant de mandrin.

3. Procédé selon la revendication 1,
**caractérisé en ce qu'**on dispose ladite chaîne à billes (1) dans un moule.

4. Procédé selon la revendication 1,
**caractérisé en ce qu'**on entrelace une pluralité de telles chaînes à billes (1A à 1D) les unes avec les autres de manière à former une nappe de billes (N1, N2).

5. Procédé selon la revendication 4,
**caractérisé en ce que** l'on superpose au moins deux telles nappes de billes (N1, N2) pour obtenir une nappe composite (N3).

6. Procédé selon la revendication 5,
**caractérisé en ce que**, dans chaque nappe de billes (N1, N2), la distance (d) entre les centres de deux billes adjacentes d'une chaîne à billes est égale à 4√2/√3 fois le rayon (R) d'une bille.

7. Procédé selon la revendication 1,
**caractérisé en ce qu'**on entrelace une pluralité de telles chaînes à billes (1) avec des liens de manière à former une nappe de billes.

8. Procédé selon l'une quelconque des revendications 2 à 7, **caractérisé en ce que**, de plus, on fixe ponctuellement lesdites billes (2) les unes par rapport aux autres.

9. Matériau cellulaire plastiquement déformable apte à absorber de l'énergie mécanique, ledit matériau étant constitué de billes métalliques creuses (2),
**caractérisé en ce que** lesdites billes métalliques creuses (2) sont deux à deux reliées les unes aux autres par une articulation (3), à la manière d'une chaîne à billes (1).

10. Matériau selon la revendication 9,
**caractérisé en ce que** ladite articulation (3) est un maillon en forme d'haltère.

## Claims

1. A method for preparing a plastically deformable cellular material being able to absorb mechanical energy using, as elementary constitutive structure, hollow metal balls (2) connected by pairs together,
**characterized in that** hollow metal balls (2) are connected by a joint (3) to form at least a ball chain (1).

2. The method according to claim 1,
**characterized in that** said ball chain (1) is wound around the lateral surface of an item acting as a mandrel.

3. The method according to claim 1,
**characterized in that** said ball chain (1) is arranged in a mould.

4. The method according to claim 1,
**characterized in that** a plurality of such ball chains (1A to 1D) is intertwined together so as to form a ball web (N1, N2).

5. The method according to claim 4,
**characterized in that** at least two such ball webs (N1, N2) are superimposed so as to obtain a composite web (N3).

6. The method according to claim 5,
**characterized in that**, in each ball web (N1, N2), the distance (d) between the centres of two adjacent balls of a ball chain is equal to 4√2/√3 times the radius (R) of a ball.

7. The method according to claim 1,
**characterized in that** a plurality of such ball chains (1) is intertwined with links so as to form a ball web.

8. The method according to any one of claims 2 to 7,
**characterized in that**, furthermore, said balls (2) are punctually fastened to each other.

9. A plastically deformable cellular material being able to absorb mechanical energy, said material being made of hollow metal balls (2),
**characterized in that** said hollow metal balls (2) are connected by pairs with each other by a joint (3), similarly to a ball chain (1).

10. The material according to claim 9,
**characterized in that** said joint (3) is a dumbbell-shaped link.

## Patentansprüche

1. Herstellungsverfahren eines plastisch verformbaren zellulären Materials, das imstande ist, mechanische Energie aufzunehmen, wobei, als elementare bildende Struktur, paarweise miteinander verbundenen hohlen Metallkugeln (2) verwendet sind, **dadurch gekennzeichnet dass** die hohlen Metallkugeln (2) duch ein gelenk (3) verbunden sind um mindestens eine Kugelkette (1) zu bilden.

2. Verfahren nach Anspruch 1, **dadurch gekennzeichnet, dass** die Kugelkette (1) um die Seitenfläche eines als Hülse dienenden Gegenstands gewickelt wird.

3. Verfahren nach Anspruch 1, **dadurch gekennzeichnet, dass** die Kugelkette (1) in einer Form angeordnet wird.

4. Verfahren nach Anspruch 1, **dadurch gekennzeichnet, dass** eine Vielzahl derartiger Kugelketten (1A bis 1 D) miteinander verflochten wird, um eine Kugellage (N1, N2) zu bilden.

5. Verfahren nach Anspruch 4, **dadurch gekennzeichnet, dass** mindestens zwei derartige Kugellagen (N1, N2) übereinandergelegt werden, um eine Verbundlage (N3) zu erhalten.

6. Verfahren nach Anspruch 5, **dadurch gekennzeichnet, dass** in jeder Kugellage (N1, N2) der Abstand (d) zwischen den Mitten zweier benachbarter Kugeln einer Kugelkette gleich 4√2√3 Mal der Radius (R) einer Kugel ist.

7. Verfahren nach Anspruch 1, **dadurch gekennzeichnet, dass** eine Vielzahl derartiger Kugelketten (1) mit Verbindungen verflochten wird, um eine Kugellage zu bilden.

8. Verfahren nach einem der Ansprüche 2 bis 7, **dadurch gekennzeichnet, dass** die Kugeln (2) außerdem punktuell aneinander fixiert werden.

9. Plastisch verformbares, zelluläres Material, das imstande ist, mechanische Energie aufzunehmen, wobei das Material aus hohlen Metallkugeln (2) besteht, **dadurch gekennzeichnet, dass** die hohlen Metallkugeln (2) in der Art einer Kugelkette (1) paarweise miteinander durch ein Gelenk (3) verbunden sind.

10. Material nach Anspruch 9, **dadurch gekennzeichnet, dass** das Gelenk (3) ein hantelförmiges Bindeglied ist.
